# EUROPÄISCHE PATENTSCHRIFT

(11) **EP 2 229 342 B1**
(45) Veröffentlichungstag und Bekanntmachung des Hinweises auf die Patenterteilung: **07.09.2011**
(21) Anmeldenummer: 08870936.5
(22) Anmeldetag: 20.11.2008
(51) Int. Cl.: C01B 33/107

(54) **VERFAHREN ZUR VERMINDERUNG DES GEHALTES VON ELEMENTEN, WIE BOR, IN HALOGENSILANEN SOWIE ANLAGE ZUR DURCHFÜHRUNG DES VERFAHRENS**
METHOD FOR REDUCING THE CONTENT IN ELEMENTS, SUCH AS BORON, IN HALOSILANES AND INSTALLATION FOR CARRYING OUT SAID METHOD
PROCÉDÉ POUR RÉDUIRE LA TENEUR EN ÉLÉMENTS, TELS QUE DU BORE, D'HALOSILANES ET INSTALLATION POUR LA MISE EN OEUVRE DUDIT PROCÉDÉ

(30) Priorität: 14.01.2008 DE 102008004397
(43) Veröffentlichungstag der Anmeldung: 22.09.2010
(73) Patentinhaber: Evonik Degussa GmbH, 45128 Essen (DE)
(72) Erfinder: MÜH, Ekkehard, 79618 Rheinfelden (DE); RAULEDER, Hartwig, 79618 Rheinfelden (DE); SCHORK, Reinhold, 79618 Rheinfelden (DE)
(86) Internationale Anmeldenummer: PCT/EP2008/065892
(87) Internationale Veröffentlichungsnummer: WO 2009/089950

(56) Entgegenhaltungen:
- WO-A-2006/054325
- GB-A- 834 380

## Beschreibung

Die Erfindung betrifft ein Verfahren zur Verminderung des Gehaltes von Elementen der dritten Hauptgruppe des Periodensystems, bevorzugt von Bor und/oder Aluminium, in Halogensilanen technischer Reinheit zur Herstellung von gereinigten Halogensilanen, insbesondere von höchstreinen Chlorsilanen. Ferner betrifft die Erfindung eine Anlage zur Durchführung dieses Verfahrens.

Aus dem Stand der Technik sind zwei Verfahren zur Aufreinigung von Halogensilanen bekannt, die auf der Verwendung von Triphenylmethylchlorid in Verbindung mit weiteren Komplexbildnern beruhen. Dies ist zum einen das mehrstufige Verfahren der GB 975 000 bei dem zur destillativen Abtrennung von Phosphor enthaltenden Verunreinigungen in Halogensilanen zunächst Zinntetrahalogenide und/oder Titantetrahalogenide zur Bildung von festen Niederschlägen zugegeben wurden. Im nächsten Schritt konnte zu dem erhaltenen Destillat Triphenylmethylchlorid in großem Überschuss zugegeben werden, um mit Zinn- oder Titansalzen Niederschläge zu bilden sowie mit gegebenenfalls weiteren vorhandenen Verunreinigungen, zu denen auch Bor, Aluminium oder andere Verunreinigungen zählen. Im folgenden Schritt wurde destilliert.

Aus der WO 2006/054325 A2 ist ein mehrstufiges Verfahren zur Herstellung von electronic Grade Siliziumtetrachlorid (Si_{eg}) oder Trichlorsilan aus Siliziumtetrachlorid oder Trichlorsilan technischer Reinheit bekannt. Ausgehend von Siliziumtetrachlorid und/oder Trichlorsilan technischer Reinheit werden unter anderem Bor enthaltende Verunreinigungen (BCl₃) in einem ersten Schritt durch Zugabe von Diphenylthiocarbazon und Triphenylchlormethan in hochsiedende Komplexe überführt und im zweiten Schritt mittels Kolonnendestillation entfernt, im dritten Schritt werden Phosphorchloride (PCl₃) und Phosphor enthaltende Verunreinigungen, Arsen und Aluminium enthaltende Verunreinigungen und weitere metallische Verunreinigungen als Destillationsrückstände in einer zweiten Kolonnendestillation abgetrennt. Es wird ausgeführt, dass zur Abtrennung aller Verunreinigungen die Verwendung beider Komplexbildner notwendig ist, weil Triphenylchlormethan die Komplexierung einer Vielzahl metallischer Verunreinigungen, mit Ausnahme von Bor, erlaubt. Erst in einem vierten Schritt wird Dichlorsilan destillativ entfernt.

Aufgabe der vorliegenden Erfindung ist es, ein einfacheres und damit wirtschaftlicheres Verfahren sowie eine Anlage zur Herstellung von höchstreinen Halogensilanen, insbesondere Chlorsilanen zu entwickeln, die sich zur Herstellung von Solarsilizium oder insbesondere auch zur Herstellung von Halbleitersilizium eignen.

Gelöst wird die Aufgabe durch das erfindungsgemäße Verfahren und die erfindungsgemäße Anlage entsprechend den Merkmalen der Patentansprüche 1 und 17. Bevorzugte Ausführungsvarianten sind in den abhängigen Ansprüchen beschrieben.

Erfindungsgemäß wird ein Verfahren bereitgestellt, dass die Herstellung von gereinigten Halogensilanen aus Halogensilanen technischer Reinheit erlaubt, in dem die Elemente der dritten Hauptgruppe des Periodensystems (III PSE), insbesondere Bor und/oder Aluminium, nahezu quantitativ abgetrennt werden. Insbesondere werden höchstreine Halogensilane erhalten.

Gegenstand der Erfindung ist ein Verfahren zur Verminderung des Gehaltes von Elementen der dritten Hauptgruppe des Periodensystems, insbesondere des Bor- und/oder Aluminiumgehaltes, in Halogensilanen technischer Reinheit zur Herstellung von gereinigten Halogensilanen umfassend die folgenden Schritte:
a) Versetzen der aufzureinigenden Halogensilane mit Triphenylmethylchlorid zur Bildung von in Halogensilanen schwerlöslichen Komplexen, und
b) Erhalten von gereinigten Halogensilanen durch Abtrennung gebildeter, schwerlöslicher Komplexe mittels mechanischer Einwirkung bzw. mechanischer Maßnahmen.

Vor der Abtrennung der Komplexe mittels mechanischer Maßnahmen kann die Reaktionsmischung thermisch behandelt, beispielsweise erhitzt, werden, um die in der Regel flockig anfallenden Komplexe zunächst zu koagulieren, so dass sie sich leichter abtrennen lassen. Bevorzugt werden höchstreine Halogensilane erhalten. Nach der Abtrennung der ausgefallenen Komplexe kann sich ein Destillationsschritt anschließen, um die Halogensilane noch weiter aufzureinigen. Unter mechanischer Einwirkung bzw. mechanischen Maßnahmen werden insbesondere die folgenden Maßnahmen, wie Filtration, Sedimentation, Dekantieren, Abschöpfen und/oder Zentrifugation verstanden, wobei die Filtration bevorzugt ist. Diese Maßnahmen können diskontinuierlich oder auch kontinuierlich durchgeführt werden.

Gemäß einer Ausführungsform kann das erfindungsgemäße Verfahren so ausgeführt werden, dass Schritt (a), das Versetzen der aufzureinigenden Halogensilane mit Triphenylmethylchlorid zur Bildung der Komplexe, in einer Vorrichtung zur Komplexierung (2) erfolgt, aus der die Halogensilane und die Komplexe zumindest teilweise in eine Trenneinheit (3), insbesondere in eine separate Trenneinheit (3), zur Abtrennung der Komplexe im Schritt (b), überführt werden. Gemäß dieser Verfahrensführung erfolgt daher der Schritt (a) separiert von Schritt (b), insbesondere räumlich getrennt. In dieser Trenneinheit (3) erfolgt die Abtrennung dann vorzugsweise zunächst mittels mechanischer Einwirkung und gegebenenfalls kann sich eine Destillation der Halogensilane anschließen, um hochreine Halogensilane zu erhalten, bevorzugt hochreines Tetrachlorsilan, Trichlorsilan und/oder Dichlorsilan. Erfindungsgemäß sind die Schritte (a) und (b) in ein kontinuierliches Verfahren zur Herstellung von höchstreinen Halogensilanen eingebunden, vorzugsweise ausgehend von einer Umsetzung von metallurgischem Silizium.

Der Vorteil dieser Verfahrensführung liegt darin begründet, dass die Komplexierung von der Abtrennung separiert ist und auf diese Weise die Abtrennung von Elementen der dritten Hauptgruppe, wie Bor und/oder Aluminium bzw. diese enthaltende Verbindungen, in ein kontinuierliches Gesamtverfahren integriert werden kann. Dies kann beispielsweise derart geschehen, dass mindestens eine Vorrichtung zur Komplexierung 2, vorzugsweise mehrere parallel geschaltete Vorrichtungen 2, einer Trenneinheit 3 zugeordnet sind. Die Vorrichtung bzw. Vorrichtungen zur Komplexierung 2 können beispielsweise satzweise oder kontinuierlich - Satzreaktor oder Rohrreaktor - mit Halogensilanen befüllt oder durchströmt werden, der Gehalt an Elementen der dritten Hauptgruppe, wie Bor, und gegebenenfalls weiterer Verunreinigungen kann analytisch bestimmt werden. Anschließend werden die aufzureinigenden Halogensilane mit Triphenylmethylchlorid versetzt, vorzugsweise mit einem leichten Überschuss von ≤ 20 Mol.-%, besonders bevorzugt ≤ 10 Mol.-%, ganz besonders bevorzugt von ≤ 5 Mol.-% oder weniger in Bezug auf die Verunreinigung mit Elementen der dritten Hauptgruppe des PSE.

Dabei kann die resultierende Reaktionsmischung homogenisiert werden, um eine vollständige Komplexierung belspielsweise der Bor enthaltenden Verbindungen zu gewährleisten. Die Homogenisierung kann durch Rühren oder im Rohrreaktor durch Verwirbelung erfolgen. Anschließend werden die Halogensilane und gegebenenfalls die Komplexe in die Trenneinheit 3 überführt. Dort schließt sich vorteilhaft zunächst eine Abtrennung der schwerlöslichen Komplexe mit mechanischen Maßnahmen an und gegebenenfalls nachfolgend eine destillative Aufarbeitung der gereinigten Halogensilane, um höchstreine Halogensilane zu erhalten.

Durch die satzweise, semikontinuierlich oder kontinuierlich, parallel durchgeführten Komplexierungen (Schritt a) und der nachfolgenden Abtrennung der Halogensilane, kann das erfindungsgemäße Verfahren in ein kontinuierliches Gesamtverfahren zur Herstellung höchstreiner Halogensilane ausgehend von einer Hydrohalogenierung von metallurgischem Silizium integriert werden.

Für das Verfahren relevante Elemente der dritten Hauptgruppe des Periodensystems (IIIa PSE), deren Gehalt in den Halogensilanen technischer Reinheit zu vermindern ist, sind insbesondere Bor und/oder Aluminium sowie prozessbedingte Verbindungen enthaltend Bor und/oder Aluminium zu nennen. Generell kann das Triphenylmethylchlorid mit allen typischen Lewis-Säuren Komplexe bilden. Dies können neben Bor und Aluminium auch Zinn, Titan, Vanadium und/oder Antimon oder Verbindungen enthaltend diese Fremdmetalle sein.

In zweckmäßigen Ausführungsvarianten kann das erfindungsgemäße Verfahren auf verschiedenste Weisen durchgeführt werden. So kann nach dem Versetzen der Halogensilane mit Triphenylmethylchlorid zunächst ein Abtrennen mittels mechanischer Maßnahmen der beispielsweise koagulierten, schwerlöslichen Komplexe, wie beispielsweise durch Filtrieren oder Zentrifugieren erfolgen. Vor der mechanischen Abtrennung kann eine thermische Behandlung von Vorteil sein, zum einen kann die Reaktionsmischung erwärmt werden, um die schwerlöslichen Komplexe zu koagulieren und damit leichter abtrennbar zu machen und/oder die Reaktionsmischung wird abgekühlt, um die Löslichkeit der Komplexe weiter herabzusetzen Beispielsweise kann die Reaktionsmischung auf etwa 0 °C oder auf Temperaturen zwischen 10 °C und - 40 °C abgekühlt werden, um dann die Abtrennung der Komplexe vorzunehmen. Nach der Abtrennung mittels mechanischer Maßnahmen kann sich eine destillative Aufreinigung der Halogensilane anschließen. Beispielsweise eine Flashdestillation über einen Rohrverdampfer oder eine Kurzwegkolonne. Üblicherweise erfolgt die destillative Aufreinigung beispielsweise der Halogensilane Siliziumtetrachlorid und/oder Trichlorsilan über eine Kolonne bei einer Kopftemperatur von etwa 31,8 °C und 56,7 °C und einem Druck von etwa 1013,25 hPa oder 1013,25 mbar_{abs}. Bei höheren oder niedrigeren Drücken ändert sich die Kopftemperatur entsprechend. Leichtsieder können zweckmäßig unter erhöhtem Druck destilliert werden.

Je nach späterem Anwendungsbereich der erhaltenen gereinigten Halogensilane, bevorzugt der höchstreinen Halogensilane, ist schon die alleinige Abtrennung der schwerlöslichen Komplexe mittels mechanischer Maßnahmen ausreichend. Dies kann vorzugsweise durch eine ein- oder zweimalige Filtration geschehen. Der Gehalt an Bor in den erhaltenen höchstreinen Halogensilanen beträgt insbesondere ≤ 50 µg/kg, bevorzugt ≤ 20 µg/kg und besonders bevorzugt ≤ 5 µg/kg Bor je Kilogramm Halogensilan.

Das erfindungsgemäße Verfahren umfassend die Schritte (a) und (b) kann in ein kontinuierliches Verfahren zur Herstellung von höchstreinen Halogensilanen eingebunden sein, insbesondere ausgehend von einer Hydrohalogenierung metallurgischen Siliziums.

Unter Halogensilanen werden bevorzugt Chlorsilane und/oder Bromsilane verstanden, wobei Siliziumtetrachlorid, Trichlorsilan und/oder Mischungen dieser Silane gegebenenfalls mit weiteren halogenierten Silanen, wie Dichlorsilan und/oder Monochlorsilan, besonders bevorzugt sind. Daher ist das Verfahren generell gut zur Verminderung des Gehaltes von Elementen der dritten Hauptgruppe des Periodensystems in Halogensilanen geeignet, wenn die Löslichkeit der gebildeten Komplexe entsprechend gering ist und/oder diese Verbindungen einen vergleichbaren Siedepunkt bzw. -bereich wie die Halogensilane aufweisen oder mit den Halogensilanen als Azeotrop übergehen würden. Verbindungen enthaltend Elemente der dritten Hauptgruppe des Periodensystems können daher teilweise nur schwer destillativ oder überhaupt nicht von den Halogensilanen abgetrennt werden. Als Siedepunkt, der im Bereich des Siedepunktes eines Halogensilans liegt, wird ein Siedepunkt angesehen, der im Bereich von ± 20 °C des Siedepunktes eines der Halogensilane bei Normaldruck (etwa 1013,25 hPa oder 1013,25 mbar) liegt.

Zweckmäßigerweise kann das Verfahren auch zur Reinigung von Tetrabromsilan, Tribromsilan und/oder Mischungen von Halogensilane angewandt werden. Generell kann in den Halogensilanen jedes Halogen unabhängig von weiteren Halogenatomen ausgewählt sein aus der Gruppe Fluor, Chlor, Brom oder Jod, so dass beispielsweise auch gemischte Halogensilane wie SiBrCl₂F oder SiBr₂ClF enthalten sein können. Neben diesen bevorzugt monomeren Verbindungen können aber auch dimere oder höhermolekulare Verbindungen, wie Hexachlordisilan, Decachlortetrasilan, Octachlortrisilan, Pentachlordisilan, Tetrachlordisilan sowie liquide Mischungen enthaltend monomere, dimere, lineare, verzweigte und/oder cyclische oligomere und/oder polymere Halogensilane entsprechend in ihrem Borgehalt vermindert werden.

Als Halogensilane technischer Reinheit werden verunreinigte Halogensilane verstanden, insbesondere Halogensilane deren Gehalt an Halogensilanen ≥ 97 Gew.-% ist und die einen Gehalt an Elementen der dritten Hauptgruppe aufweisen, insbesondere liegt der Gehalt an Elementen der dritten Hauptgruppe des Periodensystems jeweils bei bis zu 0,1 Gew.-%, beispielsweise liegt der Gehalt zwischen ≤ 0,1 Gew.-% und ≥ 100 µg/kg je Element. Bevorzugt weisen sie mindestens einen Gehalt von 99,00 Gew.-%, beispielsweise einen Gehalt von mindestens 99,9 Gew.-% des oder der gewünschten Halogensilane auf und sind mit Elementen der dritten Hauptgruppe gemäß obiger Definition verunreinigt. Beispielsweise kann die Zusammensetzung einen Gehalt von 97,5 Gew.-% Siliziumtetrachlorid und 2,2 Gew.-% Trichlorsilan (HSiCl₃), oder rd. 85 Gew.-%SiCl₄ und 15 Gew.-% HSiCl₃, oder auch zu 99,0 Gew.-% Siliziumtetrachlorid aufweisen.

Als gereinigte Halogensilane gelten technische Halogensilane deren Gehalt an Elementen der dritten Hauptgruppe des Periodensystems nach Durchführung des Verfahrens vermindert ist.

Als höchstreine Halogensilane gelten Halogensilane mit einem Gehalt an Halogensilanen von ≥ 99,9 Gew.-%, bevorzugt von 99,99 Gew.-% Halogensilan, und insbesondere mit einer maximalen Verunreinigung mit jeweils einem Element der dritten Hauptgruppe des PSE, insbesondere von Bor als auch von Aluminium enthaltenden Verbindungen, von ≤ 50 µg/kg in Bezug auf das Element je Kilogramm Halogensilan, insbesondere von ≤ 25 µg/kg, bevorzugt von ≤ 20 µg/kg, ≤ 15 µg/kg oder ≤ 10 µg/kg, wobei eine Verunreinigung von ≤ 5 µg/kg, ≤ 2 µg/kg oder ≤ 1 µg/kg je Element in dem Halogensilan besonders bevorzugt ist, erfindungsgemäß jeweils von Bor und Aluminium.

Bor enthaltende Verbindungen sind beispielsweise Bortrichlorid oder Borester. Generell können aber alle bei der Synthese der Halogensilane hergestellten oder in den Verfahren mitgeschleppte Bor enthaltenden Verbindungen bis auf einen Restgehalt von insbesondere ≤ 20 µg/kg, bevorzugt von ≤ 5 µg/kg, ≤ 2 µg/kg, besonders bevorzugt auf ≤ 1 µg/kg Bor je Kilogramm Halogensilan vermindert werden. Im Allgemeinen kann Bor und/oder eine Bor enthaltende Verbindung in Abhängigkeit von dessen Ausgangskonzentration um 50 bis 99,9 Gew.-% vermindert werden. Entsprechendes gilt für Aluminium oder für Aluminium enthaltende Verbindungen. Eine typische Aluminium enthaltende Verbindung ist AlCl₃.

Erfindungsgemäß wird im Verfahrensschritt a) des Verfahrens bevorzugt die komplexbildende Verbindung Triphenylmethylchlorid in einer Menge zugesetzt, dass das Löslichkeitsprodukt des oder der gebildeten Komplexe eines Elementes der dritten Hauptgruppe des Periodensystems (IIIa PSE) mit Triphenylmethylchlorid überschritten wird, insbesondere der dieses Element enthaltenden Verbindungen, besonders bevorzugt der Bor und/oder Aluminium enthaltenden Verbindungen, und sich ein Niederschlag aus dem oder den Komplexen bildet. Dabei ist es besonders bevorzugt, das die Menge an zugegebenen Triphenylmethylchlorid so bemessen ist, dass diese Verbindung nur in einem geringen Überschuss von etwa ≤ 20 Mol.-%, insbesondere ≤ 10 Mol.-%, besonders bevorzugt ≤ 5 Mol.-% in Bezug auf die Verunreinigung mit Elementen der dritten Hauptgruppe des Periodensystems zugegeben wird.

Daher sollte vor dem Versetzen mit Triphenylmethylchlorid der Gehalt an Verunreinigungen in den Halogensilanen technischer Reinheit bestimmt werden, insbesondere der Gehalt der Elemente der IIIa des PSE und gegebenenfalls weiterer Verunreinigungen, die mit Triphenylmethylchlorid schwerflüchtige und/oder schwerlösliche Komplexe bilden. Dies sind insbesondere die oben aufgeführten Bor und/oder Aluminium enthaltenden Verbindungen. Die Gehaltsbestimmung kann beispielsweise mittels ICP-MS geschehen. In Abhängigkeit von den Gehalten dieser Elemente (IIIa PSE) und/oder gegebenenfalls weiterer Verunreinigungen, die mit Triphenylmethylchlorid reagiere, kann dann die benötigte Menge an Triphenylmethylchlorid bestimmt werden.

Bislang wurde im Stand der Technik Triphenylmethylchlorid in deutlichem Überschuss zu den enthaltenen Borverbindungen zugesetzt. Nach dem erfindungsgemäßen Verfahren kann die benötigte Menge an Triphenylmethylchlorid an den Verunreinigungsgrad angepasst werden. Auf diese Weise kann umweltschonend die zugesetzte Menge an Triphenylmethylchlorid beispielsweise genauer an das Löslichkeitsprodukt der schwerlöslichen Borkomplexe angepasst werden Zum besseren Verständnis der Vorgehensweise wird auf die Ausführungen in den Anwendungsbeispielen verwiesen.

Die Zugabe des Triphenylmethylchlorids in Verfahrensschritt a) kann durch einmaliges zudosieren oder auch schrittweise erfolgen. Dabei kann je nach Anlagentyp oder Verfahrensführung die Zugabe als Feststoff oder auch gelöst in einem Lösungsmittel erfolgen. Als Lösungsmittel können inerte, hochsiedende Lösemittel oder bevorzugt höchstreines Halogensilan, wie Siliziumtetrachlorid und/oder Trichlorsilan verwendet werden. Auf diese Weise kann die Zugabe des Triphenylmethylchlorids sehr genau dosiert und eine gute Durchmischung in kurzer Zeit erzielt werden.

Gleichzeitig mit oder nach dem Versetzen der Halogensilane technischer Reinheit mit Triphenylmethylchlorid im Verfahrensschritt a) kann das Reaktionsgemisch thermisch behandelt werden. Die thermische Behandlung, kann wie eingangs ausgeführt in Erhitzen, beispielsweise zum Koagulieren der flockigen Komplexe bestehen und/oder zum Vervollständigen der Reaktion. Alternativ kann die Reaktionsmischung zunächst erhitzt und anschließend abgekühlt werden, um gegebenenfalls die Reaktion zu vervollständigen und anschließend die Löslichkeit der Komplexe weiter herabzusetzen. Die ausgefallenen Komplexe werden dann aus der abgekühlten Reaktionsmischung abgetrennt.

Erhitzt wird bevorzugt auf Badtemperaturen von 30 °C bis 100°C, bevorzugt zwischen 50 °C bis 85 °C, dabei koaguliert der flockige Niederschlag zunehmend zusammen und schwimmt auf dem Halogensilan obenauf. Nachfolgend wird bevorzugt ohne Rühren abgekühlt und abfiltriert, abgeschöpft, zentrifugiert oder dekantiert. Gemäß einer Verfahrensalternative kann der koagulierte Niederschlag in einem ersten Schritt abdekantiert werden und die Reaktionsmischung wird erst in einem nächsten Schritt einer Filtration unterzogen. Auf diese Weise kann die Standzeit des Filters erhöht werden. Gemäß einer Ausführungsform kann das Versetzen mit Triphenylmethylchlorid unter Rühren erfolgen, gegebenenfalls gefolgt von einem Erhitzten des Reaktionsgemisches, insbesondere ohne Rühren, an das sich das Abkühlen des Reaktionsgemisches, insbesondere ohne Rühren, anschließen kann. Nachfolgend kann eine Abtrennung der Komplexe mittels mechanischer Maßnahmen erfolgen.

Als Filtermedien kommen in dem erfindungsgemäßen Verfahren insbesondere Membran- oder Absolutfilter mit mittleren Porendurchmessern von ≤ 100 µm in Betracht. Bevorzugt sind Filtermedien mit mittleren Porendurchmessern von ≤ 10 µm oder ≤ 1 µm, wobei Filtermedien mit mittleren Porendurchmessern von ≤ 0,2 µm besonders bevorzugt sind. Kleinere Porendurchmesser, wie ≤ 0,10 µm oder besser ≤ 0,05 µm, insbesondere ≤ 0,02 µm, können ebenfalls eingesetzt werden, wobei die zunehmend aufzuwendenden Drücke bzw. Druckverluste während der Filtration zu berücksichtigen sind.

Je nach Verfahrensführung kann die erfindungsgemäße Behandlung der Halogensilane zunächst ein sorgfältiges Trocknen des Triphenylmethylchlorids erfordern, um eine Hydrolyse der aufzureinigenden Halogensilane zu unterbinden, wenn eine rein mechanische Abtrennung der gebildeten schwerlöslichen Komplexe, insbesondere der Bor enthaltenden Komplexe, vorgesehen ist. Anschließend werden die Halogensilane mit dem getrockneten Triphenylmethylchlorid unter Schutzgasatmosphäre versetzt, gegebenenfalls wird gerührt. Geeigneterweise schließt sich eine thermische Behandlung unter Normaldruck über mehre Stunden an. Üblicherweise wird die Reaktionsmischung zwischen 5 Minuten bis zu 10 Stunden, in der Regel bis zu einer Stunde behandelt. Die Gewinnung oder Abtrennung zur Herstellung der gereinigten Halogensilane erfolgt in der Regel durch Filtration, Zentrifugieren und/oder Dekantieren. Die Verfahrensführung kann je nach Bedarf diskontinuierlich oder kontinuierlich erfolgen. Bei einer späteren destillativen Aufarbeitung der Halogensilane stört Feuchtigkeit nicht, insbesondere eine geringe Menge an Restfeuchtigkeit, weil bevorzugt höhersiedende Hydrolyseprodukte Bor enthaltender Verbindungen gebildet werden, die sich destillativ abtrennen lassen.

Die Beispiele 1 a bis 1 d zeigen, dass zur Verminderung des Gehaltes an Bor direkt nach Zugabe des Triphenylmethylchlorids die mechanische Abtrennung der schwerlöslichen Komplexe erfolgen kann. Eine gewisse Standzeit der Reaktionsmischung führt zu keiner weiteren Verminderung des Gehaltes an Bor in den gereinigten Halogensilanen, insbesondere den höchstreinen Halogensilanen. Ebenso ist eine thermische Behandlung der Reaktionsmischung im Sinne von einem Erhitzen zum Vervollständigen der Reaktion nicht unbedingt notwendig, wobei jedoch das Erhitzen zu einer vorteilhaften Koagulation der Niederschläge führt, die leichter mechanisch abgetrennt werden können.

Die auf diese Weise hergestellten gereinigten Halogensilane, insbesondere höchstreinen Halogensilane, bevorzugt das höchstreine Siliziumtetrachlorid und/oder Trichlorsilan, können zur Herstellung epitaktischer Schichten, zur Herstellung von Silizium für die Herstellung von mono-, multi- oder polykristallinen Ingots oder von Wafern zur Herstellung von Solarzellen oder zur Herstellung von höchstreinem Silizium zur Anwendung in der Halbleiterindustrie, beispielsweise in elektronischen Bauteilen, oder auch in der Pharmazeutischen Industrie zur Herstellung von SiO₂, zur Herstellung von Lichtwellenleitern oder weiteren Silizium enthaltenden Verbindungen verwendet werden.

Gegenstand der Erfindung ist ferner eine Anlage (1) als auch deren Verwendung zur Verminderung des Gehaltes von Elementen der dritten Hauptgruppe des Periodensystems (IIIa PSE), insbesondere des Bor- und/oder Aluminiumgehaltes, in Halogensilanen technischer Reinheit zur Herstellung von gereinigten Halogensilanen, umfassend eine Vorrichtung zur Komplexierung (2) von Verbindungen dieser Elemente, der insbesondere eine Dosiervorrichtung zugeordnet ist, und eine der Vorrichtung zur Komplexierung zugeordnete Trenneinheit (3), insbesondere umfasst die Trenneinheit (3) eine Vorrichtung, die mittels mechanischer Einwirkung bzw. mechanischer Maßnahmen auf die Halogensilane die ausgefallenen Komplexe (Niederschlag) abtrennt. Die Vorrichtung zur Komplexierung (2) und die Trenneinheit können unmittelbar miteinander verbunden sein. Beispielsweise kann die Vorrichtung (2), ein Reaktor, direkt an eine Trenneinheit (3), beispielsweise einen Filter, angeschlossen sein. Bevorzugt können mit der Anlage höchstreinen Halogensilanen erhalten werden.

In einer alternativen erfindungsgemäßen Anlage (1) ist die Trenneinheit (3) mindestens einer Vorrichtung zur Komplexierung (2) stromabwärts nachgeschaltet, insbesondere ist die Trenneinheit (3) von der Vorrichtung zur Komplexierung (2) separiert. Dies erlaubt eine Integration der Anlage (1) in eine Gesamtanlage zur Herstellung von höchstreinen Halogensilanen ausgehend von einer Hydrohalogenierung metallurgischen Siliziums, beispielsweise in eine kontinuierlich arbeitende Gesamtanlage. Dabei kann die Vorrichtung zur Komplexierung (2) parallel und/oder in Reihe geschaltete Reaktoren, wie Satz- und/oder Rohreaktoren, zur semi- oder kontinuierlichen Komplexierung und Homogenisierung der Reaktionsmischung aufweisen, denen stromabwärts mindestens eine Trenneinheit (3) zur Abtrennung der Halogensilane von den Komplexen zugeordnet ist. Die Trenneinheit (3) umfasst erfindungsgemäß mindestens eine Vorrichtung, die mittels mechanischer Einwirkung auf die Halogensilane einen Niederschlag der Komplexe abtrennt und gegebenenfalls eine Destillationseinheit, der eine Destillationsblase, eine Kolonne oder ein Rohrverdampfer und mindestens eine Destillationsvorlage zugeordnet ist.

Eine erfindungsgemäße Trenneinheit (3) umfasst insbesondere mindestens eine Filtereinheit, eine Dekantiereinheit, eine Vorrichtung zur Abschöpfung von aufschwimmenden Niederschlägen und/oder zum Abtrennen sedimentierter Niederschläge, eine Zentrifugiereinheit/Zentrifuge und gegebenenfalls eine Destillationseinheit. Gleichfalls kann die Trenneinheit (3) neben einer Filtereinheit, Dekantiereinheit, einer Vorrichtung zur Abschöpfung and/oder einer Zentrifuge stromabwärts eine Destillationskolonne oder ein Rohrverdampfer, sowie insbesondere eine zugeordnete Destillationsblase und mindestens eine Destillationsvorlage zur Aufnahme der höchstreinen Halogensilane aufweisen, insbesondere zur fraktionierten Aufnahme der höchstreinen Halogensilane. Erfindungsgemäß können mehrere Trenneinheiten parallel oder in Reihe geschaltet und/oder in einer Kombination aus Reihen- und Parallelschaltung angeordnet sein. Zweckmäßigerweise können auch unterschiedliche Trenneinheiten miteinander kombiniert werden, beispielsweise eine Zentrifuge mit einem nachgeschalteten Filter.

Als Filter können gesinterte Materialien mit geeigneter chemischer Beständigkeit, Membranfilter und Filterpatronen basierend auf polymeren und gegebenenfalls faserigen Materialien, gewickelte Filterpatronen, Gewebefilter, Bandfilter sowie alle geeigneten Ausführungen an Filtern verwendet werden.

Die Filtereinheit weist erfindungsgemäß Filtermedien mit mittleren Porendurchmessern von ≤ 100 µm auf. Bevorzugt sind Filtermedien mit mittleren Porendurchmessern von ≤ 10 µm oder ≤ 1 µm, wobei Filtermedien mit mittleren Porendurchmessern von ≤ 0,20 µm besonders bevorzugt sind. Kleinere Porendurchmesser, wie ≤ 0,10 µm oder besser ≤ 0,05 µm, insbesondere ≤ 0,02 µm, können ebenfalls eingesetzt werden, wobei die zunehmend aufzuwendenden Drücke bzw. Druckverluste während der Filtration apparativ zu berücksichtigen sind.

Die Filtermedien sollten generell gegenüber den aufzureinigenden Halogensilanen als auch gegenüber gegebenenfalls auftretenden Hydrolyseprodukten chemisch beständig sein. Als Filtermedien kommen insbesondere anorganische Materialien und/oder inerte, organische Materialien, beispielsweise Metalle, Aktivkohle, Zeolithe, Silikate sowie Polymere, wie beispielsweise polymere Fluorcarbone, wie PTFE (Polytetrafluorethylen), PFA (Perfluoroalkoxy (PFA) substituiertes, fluoriertes Polymer), oder organische Polymere, wie PP (Polypropylen), PE (Polyethylen), PA (Polyamid), in Betracht. Besonders bevorzugt ist ein Filter aus PTFE/PFA.

Sofern die Trenneinheit (3) eine Destillationskolonne aufweist, wird dies in der Regel eine Rektifizierkolonne sein, an deren Kopf die destillativ gereinigten Produktfraktionen der höchstreinen Halogensilane, wie Siliziumtetrachlorid und/oder Trichlorsilan, gewonnen werden, während die löslichen und/oder schwerflüchtigen Komplexe in der Destillationsblase zurückbleiben. Betrieben werden kann die Anlage in Satzbetrieb oder kontinuierlich.

Die Anlage (1) kann dabei Bestandteil einer größeren Anlage sein, die der Herstellung von höchstreinen Halogensilanen ausgehend von metallurgischem Silizium dient, insbesondere ist die Anlage (1) einer Gesamtanlage umfassend einen Reaktor zur Umsetzung von metallurgischem Silizium zugeordnet.

Die folgenden Beispiele erläutern das erfindungsgemäße Verfahren näher, ohne die Erfindung auf diese Beispiele zu beschränken.

### Beispiele

Bestimmung des Borgehaltes: Die Probenvorbereitung und Messung der Proben erfolgte in einer dem Analytikfachman geläufigen Weise, indem die Probe mit demineralisiertem Wasser hydrolysiert und das Hydrolysat mittels Flusssäure (suprapur) abfluoriert wurde. Der Rückstand wurde in demineralisiertem Wasser aufgenommen und der Elementgehalt mittels ICP-MS (ELAN 6000 Perkin Elmer) bestimmt.

### Beispiel 1

### Herstellung Stammlösung

199,9 g Siliziumtetrachlorid wurden mit 0,010 g Triphenylmethylchlorid in einem Glaskolben mit Septenaufsatz versetzt (0,005 %ige Suspension). Ein Teil des unmittelbar gebildeten Niederschlages setzt sich nach etwa 10 Minuten als Bodensatz ab, während die überstehende Flüssigkeit gelb und trüb blieb.

### Beispiel 1a

Es wurde eine Suspension gemäß Beispiel 1 hergestellt und unmittelbar nach der Zugabe des Komplexbildners erfolgte eine Filtration durch einen Filteraufsatz Minisart® 0,45 µm. Weil der Niederschlag sehr fein partikulär war, wurde zweimal filtriert. Durchgeführt wurde die Filtration mit einer 10 ml Spritze. Das erhaltene Filtrat war leicht gelblich und wies nur eine schwache Trübung auf.

### Beispiel 1b

Es wurde eine Suspension gemäß Beispiel 1 hergestellt und 15 Minuten nach der Zugabe des Komplexbildners erfolgte eine Filtration mit einem Filteraufsatz Minisart® 0,45 µm an einer 10 ml Spritze. Aufgrund des feinen Niederschlags wurde zweimal filtriert. Das erhaltene Filtrat war leicht gelblich und wies nur eine schwache Trübung auf.

### Beispiel 1c

30 Minuten nach Zugabe des Komplexbildners zur Bildung einer Suspension gemäß Beispiel 1 erfolgte eine Filtration mit einem Filteraufsatz Minisart® 0,45 µm an einer 10 ml Spritze. Aufgrund des feinen Niederschlags wurde zweimal filtriert. Das erhaltene Filtrat war leicht gelblich und wies nur eine schwache Trübung auf.

**Tabelle 1 Gehalt Bor gemäß den Beispielen 1, 1a, 1b und 1 c**

| | Gehalt an Bor in µg/kg |
|---|---|
| Stammlösung (1) | 214 |
| Filtration direkt nach Zugabe (1 a) Komplexbildner (Triphenylmethylchlorid) | 16 |
| Filtration 15 Minuten nach Zugabe des Komplexbildners (1 b) | 18 |
| Filtration 30 Minuten nach Zugabe des Komplexbildners (1 c) | 18 |

### Beispiel 1d

Es wurde eine Suspension gemäß Beispiel 1 hergestellt und zweimal mit einem Filteraufsatz Minisart® 0,2 µm an einer 10 ml Spritze filtriert. Das auf diese Weise erhaltene Filtrat war klar und farblos. Der Gehalt an Bor der Stammlösung konnte von ursprünglich 214 µg/kg auf 17 µg/kg vermindert werden.

Der Gehalt an Bor konnte durch eine anschließende Flashdestillation auf einen Gehalt von unter 5 µg/kg nach der Destillation vermindert werden.

Die Destillation erfolgte unter Stickstoffatmosphäre und unter ständigem Rühren mittels eines Magnetrührers. Die Temperaturzuführung erfolgte über ein Ölbad mit Temperatursteuerung. Die Badtemperatur betrug während der Destillation ca. 80°C und die Temperatur in der Destillationsblase gegen Ende der Destillation bis zu 60 °C. Der Siedepunkt des Sliliziumtetrachlorids lag bei etwa 57 °C bei Normaldruck.

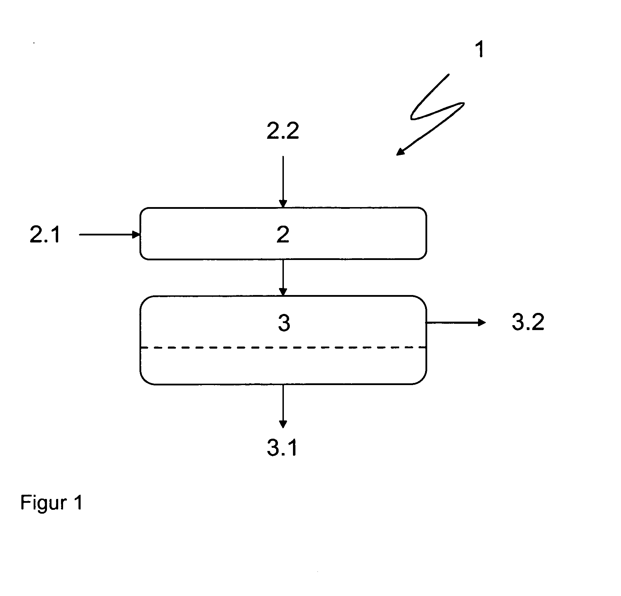

Die erfindungsgemäße Anlage wird im Folgenden anhand des in der Figur 1 schematisch dargestellten Ausführungsbeispiels näher erläutert. Es stellt dar:
- Figur 1:: Schematische Darstellung einer Anlage mit mechanischer Trenneinheit.

Die in Figur 1 dargestellte Anlage (1) zur Verminderung des Gehaltes von Elementen der dritten Hauptgruppe des Periodensystems in Halogensilanen ist aus einem gegenüber den Reaktionsbedingungen beständigen Werkstoff gefertigt, beispielsweise aus einer Edelstahllegierung. Die Anlage (1) umfasst eine Vorrichtung zur Komplexierung (2) von Verbindungen enthaltend diese Elemente und eine der Vorrichtung (2) zugeordnete Trenneinheit (3). Die Vorrichtung zur Komplexierung (2) ist in der Regel ein Reaktor, dies kann ein Kesselreaktor oder ein Rohrreaktor sein, dem eine Trenneinheit (3) zugeordnet ist. Wie oben ausgeführt kann diese Trenneinheit (3) eine Filtereinheit und gegebenenfalls eine Destillationseinheit aufweisen. Die Trenneinheit (3) in der Figur 1 ist ein Filter und stromabwärts der Vorrichtung zur Komplexierung (2) angeordnet. Die Filtereinheit oder ein Bündel von Filtereinheiten können unmittelbar unterhalb des Reaktors angeordnet sein, um die geodätische Höhe der Reaktionsmischung im Reaktor nutzbar zu machen.

In der Figur 1 ist die Anlage (1) mit einer Zuführung (2.1) ausgestattet, über die Halogensilane technischer Reinheit in die Vorrichtung zur Komplexierung (2) geleitet werden, über eine weitere Zuführung (2.2) kann Triphenylmethylchlorid zugegeben werden. Die gebildete Reaktionsmischung kann dann durch einen Filter der Trenneinheit (3) geleitet werden, um gereinigtes Halogensilan (3.1) zu erhalten. Bei (3.2) können die durch Zugabe von Triphenylmethylchlorid abgeschiedenen Komplexe entfernt werden.

Alternativ kann die Trenneinheit (3) zusätzlich eine Destillationseinheit aufweisen, wobei die Destillationseinheit eine Destillationsblase, eine Kolonne (Rektifizierkolonne) mit mindestens einer Trennstufe oder einen Rohrverdampfer und mindestens eine Destillationsvorlage zur Aufnahme jeweils eines höchstreinen Halogensilans aufweist (nicht eingezeichnet). Zur genauen Dosierung der Triphenylmethylchloridmenge kann der Komplexiervorrichtung (2) eine Dosiervorrichtung (nicht eingezeichnet) zugeordnet sein.

## Patentansprüche

1. Verfahren zur Verminderung des Gehaltes von Elementen der dritten Hauptgruppe des Periodensystems in Halogensilanen technischer Reinheit zur Herstellung von gereinigten Halogensilanen, umfassend die folgenden Schritte,
a) Versetzen der aufzureinigenden Halogensilane mit Triphenylmethylchlorid zur Bildung von in Halogensilanen schwerlöslichen Komplexen,
b) Erhalten von gereinigten Halogensilanen durch Abtrennung gebildeter, schwerlöslicher Komplexe mittels mechanischer Einwirkung.

2. Verfahren nach Anspruch 1,
**dadurch gekennzeichnet,**
**dass** das Abtrennen der Komplexe mittels Zentrifugation, Abschöpfen, Dekantieren, Sedimentation und/oder Filtration erfolgt.

3. Verfahren nach Anspruch 1 oder 2,
**dadurch gekennzeichnet,**
**dass** der Schritt (a), das Versetzen der aufzureinigenden Halogensilane mit Triphenylmethylchlorid zur Bildung der Komplexe, in einer Vorrichtung zur Komplexierung (2) erfolgt, aus der die Halogensilane und die Komplexe zumindest teilweise in eine Trenneinheit (3), zur Abtrennung der Komplexe im Schritt (b), überführt werden.

4. Verfahren nach einem der Ansprüche 1 bis 3,
**dadurch gekennzeichnet,**
**dass** die Schritte (a) und (b) in ein kontinuierliches Verfahren zur Herstellung von höchstreinen Halogensilanen eingebunden sind.

5. Verfahren nach einem der Ansprüche 1 bis 4,
**dadurch gekennzeichnet,**
**dass** der Gehalt von Bor und/oder Aluminium vermindert wird.

6. Verfahren nach einem der Ansprüche 1 bis 5,
**dadurch gekennzeichnet,**
**dass** die Halogensilane Chlorsilanen entsprechen, wobei die Halogensilane bevorzugt Tetrachlorsilan und/oder Trichlorsilan entsprechen.

7. Verfahren nach einem der Ansprüche 1 bis 6,
**dadurch gekennzeichnet,**
**dass** der Gehalt an Verunreinigungen in den Halogensilanen technischer Reinheit bestimmt wird, die mit Triphenylmethylchlorid Komplexe bilden.

8. Verfahren nach einem der Ansprüche 1 bis 7,
**dadurch gekennzeichnet,**
**dass** im Verfahrensschritt a) das Triphenylmethylchlorid in einer Menge zugesetzt wird, dass das Löslichkeitsprodukt des oder der gebildeten Komplexe von Verbindungen der Elemente der dritten Hauptgruppe des Periodensystems mit Triphenylmethylchlorid überschritten wird und sich ein Niederschlag der Komplexe bildet, wobei im Verfahrensschritt a) das Triphenylmethylchlorid bevorzugt schrittweise zugesetzt wird.

9. Verfahren nach einem der Ansprüche 1 bis 8,
**dadurch gekennzeichnet,**
**dass** im Verfahrensschritt a) gleichzeitig mit oder nach dem Versetzen mit Triphenylmethylchlorid das Reaktionsgemisch thermisch behandelt wird.

10. Verfahren nach einem der Ansprüche 1 bis 9,
**dadurch gekennzeichnet,**
**dass** die Filtration mit Filtermedien mit einem mittleren Porendurchmesser von ≤ 100 µm erfolgt.

11. Verfahren nach einem der Ansprüche 1 bis 10,
**dadurch gekennzeichnet,**
**dass** höchstreine Halogensilane erhalten werden, wobei bevorzugt höchstreine Halogensilane mit einem Gehalt jeweils eines Elementes der dritten Hauptgruppe des Periodensystems von ≤ 50 µg/kg erhalten werden.

12. Verfahren nach einem der Ansprüche 1 bis 11,
**dadurch gekennzeichnet,**
**dass** sich an die mechanische Abtrennung der Komplexe mindestens eine Destillation anschließt und hochreine Halogensilane erhalten werden, wobei bevorzugt hochreines Tetrachlorsilan, Trichlorsilan und/oder Dichlorsilan erhalten werden.

13. Anlage (1) zur Verminderung des Gehaltes von Elementen der dritten Hauptgruppe des Periodensystems in Halogensilanen gemäβ Anspruch 1 umfassend mindestens eine Vorrichtung zur Komplexierung (2) von Verbindungen enthaltend diese Elemente und eine der Vorrichtung zugeordneten Trenneinheit (3), wobei die Trenneinheit (3) eine Vorrichtung umfasst, die mittels mechanischer Einwirkung auf die Halogensilane einen Niederschlag der Komplexe abtrennt.

14. Anlage nach Anspruch 13,
**dadurch gekennzeichnet,**
**dass** die Trenneinheit (3) mindestens einer Vorrichtung zur Komplexierung (2) stromabwärts nachgeschaltet ist.

15. Anlage nach Anspruch 13 oder 14,
**dadurch gekennzeichnet,**
**dass** die Trenneinheit (3) eine Zentrifugier-, eine Dekantier- und/oder eine Filtereinheit und gegebenenfalls eine Destillationseinheit aufweist, wobei die Destillationseinheit bevorzugt eine Destillationsblase, eine Kolonne und mindestens eine Destillationsvorlage aufweist.

16. Anlage nach einem der Ansprüche 13 bis 15,
**dadurch gekennzeichnet,**
**dass** der Vorrichtung zur Komplexierung (2) eine Dosiervorrichtung zugeordnet ist.

17. Anlage nach einem der Ansprüche 13 bis 16,
**dadurch gekennzeichnet,**
**dass** die Anlage (1) einer Gesamtanlage umfassend einen Reaktor zur Umsetzung von metallurgischem Silizium zugeordnet ist.

18. Verwendung der Anlage nach einem der Ansprüche 13 bis 17 zur Durchführung eines Verfahrens nach einem der Ansprüche 1 bis 12.

## Claims

1. Process for reducing the content of elements of the third main group of the Periodic Table in halosilanes of technical-grade purity to prepare purified halosilanes, comprising the following steps:
a) admixing the halosilanes to be purified with triphenylmethyl chloride to form complexes which are sparingly soluble in halosilanes,
b) obtaining purified halosilanes by removing sparingly soluble complexes formed by means of mechanical action.

2. Process according to Claim 1,
**characterized in that**
the complexes are removed by means of centrifugation, skimming-off, decantation, sedimentation and/or filtration.

3. Process according to Claim 1 or 2,
**characterized in that**
step (a), the admixing of the halosilanes to be purified with triphenylmethyl chloride to form the complexes, is effected in an apparatus for complexation (2), from which the halosilanes and the complexes are transferred at least partly into a separating unit (3) for removing the complexes in step (b).

4. Process according to any one of Claims 1 to 3,
**characterized in that**
steps (a) and (b) are incorporated into a continuous process for preparing ultrahigh-purity halosilanes.

5. Process according to any one of Claims 1 to 4,
**characterized in that**
the boron and/or aluminium content is reduced.

6. Process according to any one of Claims 1 to 5,
**characterized in that**
the halosilanes are chlorosilanes, and the halosilanes are preferably tetrachlorosilane and/or trichlorosilane.

7. Process according to any one of Claims 1 to 6,
**characterized in that**
the content of impurities is determined in the halosilanes of technical-grade purity which form complexes with triphenylmethyl chloride.

8. Process according to any one of Claims 1 to 7,
**characterized in that**
the triphenylmethyl chloride is added in process step a) in such an amount that the solubility product of the complex(es) formed from compounds of the elements of the third main group of the Periodic Table with triphenylmethyl chloride is exceeded and a precipitate of the complexes forms, and the triphenylmethyl chloride is preferably added stepwise in process step a).

9. Process according to any one of Claims 1 to 8,
**characterized in that**
the reaction mixture is treated thermally in process step (a) simultaneously with or after the admixing with triphenylmethyl chloride.

10. Process according to any one of Claims 1 to 9,
**characterized in that**
the filtration is effected with filter media having a mean pore diameter of ≤ 100 µm.

11. Process according to any one of Claims 1 to 10,
**characterized in that**
ultrahigh-purity halosilanes are obtained, and ultrahigh-purity halosilanes with a content of each element of the third main group of the Periodic Table of ≤ 50 µg/kg are preferably obtained.

12. Process according to any one of Claims 1 to 11,
**characterized in that**
the mechanical removal of the complexes is followed by at least one distillation to obtain high-purity halosilanes, and high-purity tetrachlorosilane, trichlorosilane and/or dichlorosilane is preferably obtained.

13. Plant (1) for reducing the content of elements of the third main group of the Periodic Table in halosilanes according to Claim 1, comprising at least one apparatus for complexation (2) of compounds containing these elements and a separating unit (3) assigned to the apparatus, said separating unit (3) comprising an apparatus which removes a precipitate of the complexes by means of mechanical action on the halosilanes.

14. Plant according to Claim 13,
**characterized in that**
the separating unit (3) is connected downstream of at least one apparatus for complexation (2).

15. Plant according to Claim 13 or 14,
**characterized in that**
the separating unit (3) has a centrifuging unit, a decanting unit and/or a filter unit and optionally a distillation unit, and the distillation unit preferably has a distillation still, a column and at least one distillation receiver.

16. Plant according to any one of Claims 13 to 15,
**characterized in that**
a metering apparatus is assigned to the apparatus for complexation (2).

17. Plant according to any one of Claims 13 to 16,
**characterized in that**
the plant (1) is assigned to an overall plant comprising a reactor for converting metallurgical silicon.

18. Use of the plant according to any one of Claims 13 to 17 for performing a process according to any one of Claims 1 to 12.

## Revendications

1. Procédé pour réduire la teneur en éléments du troisième groupe principal du système périodique dans des halogénosilanes de pureté technique pour la préparation d'halogénosilanes purifiés, comprenant les étapes suivantes,
a) mélange des halogénosilanes à purifier avec du chlorure de triphénylméthyle pour la formation de complexes peu solubles dans les halogénosilanes,
b) obtention d'halogénosilanes purifiés par séparation des complexes peu solubles formés par action mécanique.

2. Procédé selon la revendication 1, **caractérisé en ce que** la séparation des complexes a lieu par centrifugation, écumage, décantation, sédimentation et/ou filtration.

3. Procédé selon la revendication 1 ou 2, **caractérisé en ce que** l'étape (a), le mélange des halogénosilanes à purifier avec du chlorure de triphénylméthyle pour la formation des complexes a lieu dans un dispositif pour la complexation (2), à partir duquel les halogénosilanes et les complexes sont transférés au moins partiellement dans une unité de séparation (3) destinée à la séparation des complexes dans l'étape (b).

4. Procédé selon l'une quelconque des revendications 1 à 3, **caractérisé en ce que** les étapes (a) et (b) sont intégrées dans un procédé continu pour la préparation d'halogénosilanes de haute pureté.

5. Procédé selon l'une quelconque des revendications 1 à 4, **caractérisé en ce que** la teneur en bore et/ou en aluminium est réduite.

6. Procédé selon l'une quelconque des revendications 1 à 5, **caractérisé en ce que** les halogénosilanes correspondent à des chlorosilanes, où les halogénosilanes correspondent de préférence à du tétrachlorosilane et/ou trichlorosilane.

7. Procédé selon l'une quelconque des revendications 1 à 6, **caractérisé en ce qu'**on détermine la teneur en impuretés dans les halogénosilanes de pureté technique, qui forment des complexes avec le chlorure de triphénylméthyle.

8. Procédé selon l'une quelconque des revendications 1 à 7, **caractérisé en ce qu'**on ajoute, dans l'étape de procédé a), le chlorure de triphénylméthyle en une quantité telle que le produit de solubilité du ou des complexes formés de composés des éléments du troisième groupe principal du système périodique avec le chlorure de triphénylméthyle est dépassé et qu'il se forme un précipité des complexes, où dans l'étape de procédé a), le chlorure de triphénylméthyle est de préférence ajouté progressivement.

9. Procédé selon l'une quelconque des revendications 1 à 8, **caractérisé en ce que**, dans l'étape de procédé a), le mélange réactionnel est traité thermiquement en même temps que ou après le mélange avec le chlorure de triphénylméthyle.

10. Procédé selon l'une quelconque des revendications 1 à 9, **caractérisé en ce que** la filtration est réalisée avec des agents de filtration présentant un diamètre moyen des pores ≤ 100 µm.

11. Procédé selon l'une quelconque des revendications 1 à 10, **caractérisé en ce qu'**on obtient des halogénosilanes de haute pureté, en obtenant de préférence des halogénosilanes de haute pureté présentant une teneur à chaque fois en un élément du troisième groupe principal du système périodique ≤ 50 µg/kg.

12. Procédé selon l'une quelconque des revendications 1 à 11, **caractérisé en ce que** la séparation mécanique des complexes est suivie d'au moins une distillation et on obtient des halogénosilanes de haute pureté, en obtenant de préférence du tétrachlorosilane, du trichlorosilane et/ou du dichlorosilane de haute pureté.

13. Installation (1) pour réduire la teneur en éléments du troisième groupe principal du système périodique dans des halogénosilanes selon la revendication 1, comprenant au moins un dispositif pour la complexation (2) de composés contenant ces éléments et une unité de séparation (3) associée au dispositif, l'unité de séparation (3) comprenant un dispositif qui sépare par action mécanique sur les halogénosilanes un précipité des complexes.

14. Installation selon la revendication 13, **caractérisée en ce que** l'unité de séparation (3) est disposée en aval d'au moins un dispositif pour la complexation (2).

15. Installation selon la revendication 13 ou 14, **caractérisée en ce que** l'unité de séparation (3) présente une unité de centrifugation, de décantation et/ou de filtration et le cas échéant une unité de distillation, où l'unité de distillation présente de préférence une bulle de distillation, une colonne et au moins un collecteur de distillation.

16. Installation selon l'une quelconque des revendications 13 à 15, **caractérisée en ce qu'**un dispositif de dosage est associé au dispositif de complexation (2).

17. Installation selon l'une quelconque des revendications 13 à 16, **caractérisée en ce que** l'installation (1) est associée à une installation totale comprenant un réacteur pour la transformation de silicium métallurgique.

18. Utilisation de l'installation selon l'une quelconque des revendications 13 à 17 pour réaliser un procédé selon l'une quelconque des revendications 1 à 12.
